# EUROPEAN PATENT APPLICATION

(11) **EP 4 679 844 A1**
(43) Date of publication of application: **14.01.2026**
(21) Application number: 24823556.6
(22) Date of filing: 19.04.2024
(51) Int. Cl.: H04N 21/485, H04N 21/436, H04N 21/462, H04N 21/258

(54) **ELECTRONIC DEVICE AND IMAGE QUALITY SETTING METHOD THEREFOR**

(30) Priority: 13.06.2023 KR 20230075754
(71) Applicant: Samsung Electronics Co., Ltd., Suwon-si, Gyeonggi-do 16677 (KR)
(72) Inventor: CHA, Taehwan, Suwon-si Gyeonggi-do 16677 (KR)
(74) Representative: Appleyard Lees IP LLP
(86) International application number: PCT/KR2024/005337
(87) International publication number: WO 2024/258035

(57) **Abstract**

An electronic apparatus may include: a display; a memory for storing at least one instruction; and one or more processors connected to the display and the memory to control the electronic apparatus, wherein the one or more processors may execute the at least one instruction to, when content is played back according to a pre-set event, obtain at least one of image quality information of a predetermined device among at least one external device or image quality information of a device in which the content is most recently played back based on a playback time point of the content, and change an image quality setting of the display on the basis of the obtained image quality information.

## Description

### [Technical Field]

Certain example embodiments may relate to an electronic apparatus and/or an image quality setting method therefor, and for example, to an electronic apparatus for setting an image quality based on image quality information of an external device, and/or a method for obtaining a captured image.

### [Background Art]

Advances in electronic technology have led to the development of services utilizing various types of electronic apparatuses. In particular, various multi-device experience (MDE) services, which integrate artificial intelligence (AI) with internet of things (IoT) or the like across a plurality of devices, have been proposed.

### [Disclosure of Invention]

### [Solution to Problem]

According to one or more embodiments of the present disclosure, provided is an electronic apparatus including: a display; a memory storing at least one instruction; and at least one processor connected to the display and the memory, and configured to control the electronic apparatus, wherein by executing the at least one instruction, the at least one processor is configured to obtain at least one of image quality information of a predetermined device among at least one external device or image quality information of a device on which content is most recently played back based on a content playback time point if the content is played back according to a predetermined event, and change an image quality setting of the display based on the obtained image quality information.

The at least one processor may be configured to obtain the at least one of the image quality information of the predetermined device or the image quality information of the device on which the content is most recently played back if the content is played back while a function for sharing image quality information among a plurality of devices is turned on.

The device may further include a communication interface, wherein the at least one processor may be configured to obtain the image quality information from at least one of the predetermined device or the device on which the content is most recently played back.

The device may further include a communication interface, wherein the at least one processor may be configured to obtain the image quality information of at least one of the predetermined device or the device on which the content is most recently played back from an external server that manages multi-device experience (MDE) information shared among the plurality of devices through the communication interface.

The at least one processor may be configured to transmit, to the external server, at least one of information about the content playback time point of the electronic apparatus or updated image quality information of the electronic apparatus.

The at least one processor may be configured to provide a first user interface (UI) screen for selecting one of a plurality of image quality information sharing modes, and obtain one of the image quality information of the predetermined device or the image quality information of the device on which the content is most recently played back based on the image quality information sharing mode selected through the first UI screen.

The at least one processor may be configured to provide a second UI screen for selecting an image quality setting value to be shared in each of the plurality of image quality information sharing modes, and obtain the image quality information based on the image quality setting value selected through the second UI screen in each of the plurality of image quality information sharing modes.

The at least one processor may be configured to identify target image quality information based on at least one of the obtained image quality information and the resolution, panel type, or panel performance of the display, and change the image quality setting of the display based on the identified target image quality information.

The image quality information may include at least one of color temperature information, gamma information, brightness information, color information, sharpness information, motion processing information, or contrast ratio information.

According to one or more embodiments of the present disclosure, provided is an image quality setting method for an electronic apparatus, the method including: obtaining at least one of image quality information of a predetermined device among at least one external device or image quality information of a device on which content is most recently played back based on a content playback time point if the content is played back according to a predetermined event; and changing an image quality setting of a display based on the obtained image quality information.

In the obtaining of the at least one of the image quality information, the at least one of the image quality information of the predetermined device or the image quality information of the device on which the content is most recently played back may be obtained if the content is played back while a function for sharing the image quality information among a plurality of devices is turned on.

In the obtaining of the at least one of the image quality information, the image quality information may be obtained from at least one of the predetermined device or the device on which the content is most recently played back.

In the obtaining of the at least one of the image quality information, the image quality information of at least one of the predetermined device or the device on which the content is most recently played back may be obtained from an external server that manages multi-device experience (MDE) information shared among the plurality of devices through the communication interface.

The method may further include transmitting, to the external server, at least one of information about the content playback time point of the electronic apparatus or updated image quality information of the electronic apparatus.

The method may further include: providing a first user interface (UI) screen for selecting one of a plurality of image quality information sharing modes; and obtaining one of the image quality information of the predetermined device or the image quality information of the device on which the content is most recently played back based on the image quality information sharing mode selected through the first UI screen.

The method may further include: providing a second UI screen for selecting an image quality setting value to be shared in each of the plurality of image quality information sharing modes; and obtaining the image quality information based on the image quality setting value selected through the second UI screen in each of the plurality of image quality information sharing modes.

The method may further include: identifying target image quality information based on at least one of the obtained image quality information and the resolution, panel type, or panel performance of the display; and changing the image quality setting of the display based on the identified target image quality information.

The image quality information may include at least one of color temperature information, gamma information, brightness information, color information, sharpness information, motion processing information, or contrast ratio information.

According to one or more embodiments of the present disclosure, provided is a non-transitory computer-readable medium storing computer instructions that cause an electronic apparatus to perform an operation if executed by a processor of the electronic apparatus, the operation includes obtaining at least one of image quality information of a predetermined device among at least one external device or image quality information of a device on which content is most recently played back based on a content playback time point if the content is played back according to a predetermined event, and changing an image quality setting of a display based on the obtained image quality information.

### [Brief Description of Drawings]

FIG. 1A is a diagram illustrating a multi-device experience (MDE) environment according to an example embodiment(s).
FIG. 1B is a diagram illustrating an MDE environment according to an example embodiment(s).
FIG. 2A is a block diagram illustrating a configuration of an electronic apparatus according to an example embodiment(s).
FIG. 2B is a block diagram illustrating a specific configuration of the electronic apparatus according to an example embodiment(s).
FIG. 3 is a flowchart illustrating an image quality setting method for an electronic apparatus 100 according to an example embodiment(s).
FIG. 4 is a flowchart illustrating an image quality setting method for the electronic apparatus according to an example embodiment(s).
FIG. 5A is a diagram illustrating an exemplary user interface (UI) screen according to an example embodiment(s).
FIG. 5B is a diagram illustrating an exemplary UI screen according to an example embodiment(s).
FIG. 6A is a diagram illustrating various MDE services according to an example embodiment(s).
FIG. 6B is a diagram illustrating various MDE services according to an example embodiment(s).
FIG. 6C is a diagram illustrating various MDE services according to an example embodiment(s).
FIG. 6D is a diagram illustrating various MDE services according to an example embodiment(s).
FIG. 6E is a diagram illustrating various MDE services according to an example embodiment(s).
FIG. 6F is a diagram illustrating various MDE services according to an example embodiment(s).
FIG. 7 is a diagram illustrating a method for sharing image quality information according to an example embodiment(s).
FIG. 8 is a diagram illustrating a method for sharing image quality information according to an example embodiment(s).

### DETAILED DESCRIPTION

Hereinafter, the embodiments of the present disclosure are described in detail with reference to the accompanying drawings.

Terms used in the specification will be briefly described, and the present disclosure will then be described in detail.

General terms currently widely used are selected as terms used in embodiments of the present disclosure in consideration of their functions in the present disclosure, and may be changed based on the intentions of those skilled in the art or a judicial precedent, the emergence of a new technique, or the like. In addition, in a specific case, terms arbitrarily selected by an applicant may be present. In this case, the meanings of such terms are mentioned in detail in corresponding descriptions of the present disclosure. Therefore, the terms used in the present disclosure need to be defined on the basis of the meanings of the terms and the contents throughout the present disclosure rather than simple names of the terms.

Terms "first", "second", and the like, may be used to describe various components. However, the components are not to be construed as being limited to these terms. The terms are used only to distinguish one component and another component from each other.

A term of a singular number may include its plural number unless explicitly indicated otherwise in the context. It should be understood that a term "include" or "formed of" used in this application specifies the presence of features, numerals, steps, operations, components, parts, or combinations thereof, which are mentioned in the specification, and does not preclude the presence or addition of one or more other features, numerals, steps, operations, components, parts, or combinations thereof.

An expression such as "at least one of A or/and B" may indicate either "A or B", or "both of A and B."

In the present disclosure, a "module" or a "~er/~or" may perform at least one function or operation, and be implemented by hardware, software, or a combination of hardware and software. In addition, a plurality of "modules" or a plurality of "~ers/~ors" may be integrated in at least one module and be implemented by at least one processor 130 (not shown) except for a "module" or a "~er/or" that needs to be implemented by a specific hardware.

Hereinafter, the embodiments of the present disclosure are described in detail with reference to the accompanying drawings so that those skilled in the art to which the present disclosure pertains may easily practice the present disclosure. However, the present disclosure may be modified in various different forms, and is not limited to the embodiments provided in the specification. In addition, in the drawings, portions unrelated to the description are omitted to clearly describe the present disclosure, and similar portions are denoted by similar reference numerals throughout the specification.

Hereinafter, an example embodiment(s) are described in more detail with reference to the accompanying drawings.

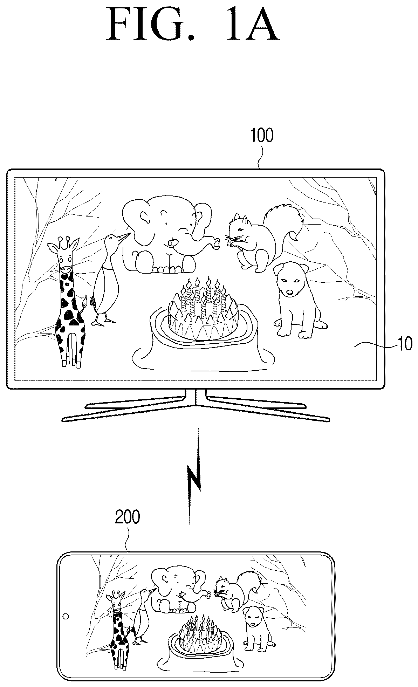

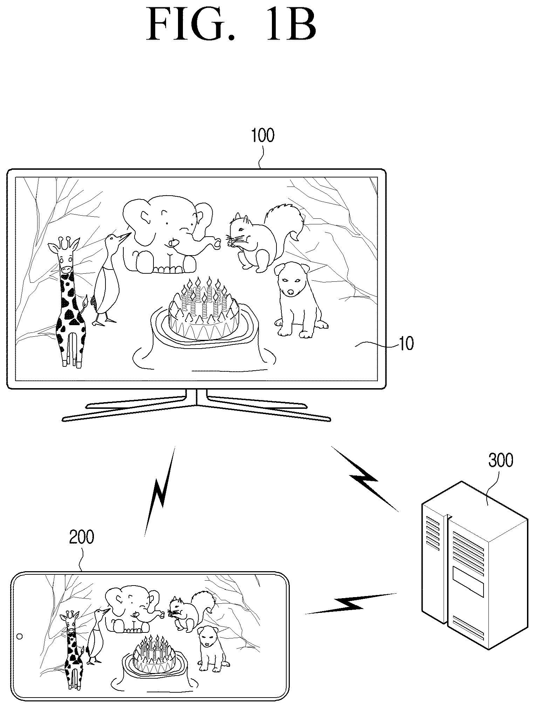

FIGS. 1A and 1B are diagrams each illustrating a multi-device experience (MDE) environment according to an example embodiment(s).

Multi-device experience (MDE) refers to a user environment that provides a differentiated experience by integrating internet of things (IoT) and/or artificial intelligence (AI) or the like across a plurality of devices. For example, various types of devices, such as televisions (TVs), home appliances, mobile devices, and wearables, may be connected to provide a variety of services.

For example, a plurality of devices for providing the MDE environment, for example, a first electronic apparatus 100 and a second electronic apparatus 200, may be implemented as various devices. For example, each of the first electronic apparatus 100 and the second electronic apparatus 200 may be implemented as an electronic apparatus having a display function, such as a TV, a smart monitor, a projector, a smartphone, a tablet personal computer (PC), a desktop PC, a laptop PC, a PC, a portable multimedia player (PMP), a large format display (LFD), a digital signage, a digital information display (DID), a video wall, a navigation system, or an AI speaker. In addition, each of the first electronic apparatus 100 and the second electronic apparatus 200 may be implemented as a home appliance device having a display function, such as a refrigerator, an air conditioner, an air purifier, an oven, or a washing machine. In addition, each of the first electronic apparatus 100 and the second electronic apparatus 200 may be implemented as a wearable device having a display function, such as a smart watch.

Each of the first electronic apparatus 100 and the second electronic apparatus 200 may communicate via various communication methods, including wireless communication such as Bluetooth, wireless fidelity (Wi-Fi), infrared communication, or mobile communication, as well as wired communication.

For example, as shown in FIGS. 1A and 1B, it is assumed that the first electronic apparatus 100 is implemented as a TV and the second electronic apparatus 200 is implemented as a smartphone.

According to the example shown in FIG. 1A, each of the first electronic apparatus 100 and the second electronic apparatus 200 may communicate directly without passing through a separate server, and the second electronic apparatus 200 may be implemented to allow the first electronic apparatus 100 to control the second electronic apparatus 200. For example, each of the first electronic apparatus 100 and the second electronic apparatus 200 may communicate by using a short-range communication method such as Bluetooth communication or Wi-Fi direct communication.

According to the example shown in FIG. 1B, the first electronic apparatus 100 and the second electronic apparatus 200 may be pre-registered through a server 300. For example, at least one of the first electronic apparatus 100 or the second electronic apparatus 200 may install an internet of things (IoT) application for registering and managing a plurality of electronic apparatuses to the server 300. The application refers to software that a user directly uses on an operating system (OS), and may be provided in the form of an icon interface on a screen of at least one of the first electronic apparatus 100 or the second electronic apparatus 200. For example, each of the first electronic apparatus 100 and the second electronic apparatus 200 may be an internet of things (IoT) device that supports a Wi-Fi module for communicating with the server 300. For example, the user may execute the IoT application on at least one of the first electronic apparatus 100 and the second electronic apparatus 200, input a user account, and log in to the server 300 through the input user account, and at least one of the first electronic apparatus 100 and the second electronic apparatus 200 may communicate with the server 300 based on the logged-in user account. The server 300 may manage each of the first electronic apparatus 100 and the second electronic apparatus 200 registered to the user account as a multi device experience (MDE) service providing device. Here, the server 300 may be implemented as a cloud server, and is not limited thereto.

For example, content provided on the first electronic apparatus 100 may be continued on the second electronic apparatus 200, or viewed through content sharing such as screen mirroring. In this case, the first electronic apparatus 100 and the second electronic apparatus 200 may fail to provide the same image quality experience due to a feature of a currently provided service.

Therefore, the following description describes various embodiments that may provide the same image quality experience across the plurality of devices if the content based on an MDE service is provided.

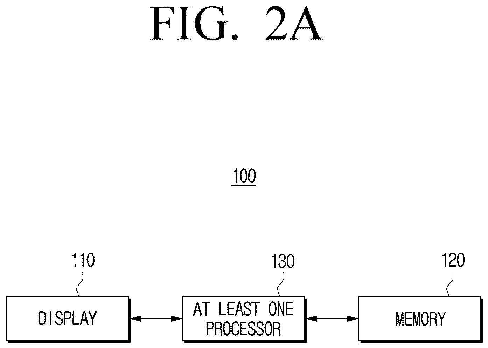

FIG. 2A is a block diagram illustrating a configuration of the electronic apparatus according to at least one embodiment.

According to FIG. 2A, the electronic apparatus 100 may include a display 110, a memory 120, and at least one processor130.

The display 110 may be implemented as a display including a self-luminous element, or a display including a non-luminous element and a backlight. For example, the display may be implemented as various types of displays, such as a liquid crystal display (LCD), an organic light emitting diode (OLED), a light-emitting diode (LED), a micro LED, a mini LED, a plasma display panel (PDP), a quantum dot (QD) display, and a quantum dot light-emitting diode (QLED). The display 110 may also include a driving circuit, a backlight unit, and the like, which may be implemented as an amorphous silicon thin film transistor (a-si TFT), a low temperature poly silicon (LTPS) TFT, or an organic TFT (OTFT). For example, a touch sensor in the form of a touch film, a touch sheet, or a touch pad that detects a touch operation may be disposed on a front surface of the display 110, and may be implemented to detect various types of touch input. For example, the display 110 may detect various types of touch inputs, such as a touch input by a user hand, a touch input by an input device such as a stylus pen, and a touch input by a specific electrostatic material. Here, the input device may be implemented as a pen-type input device that may be referred to by any of various terms such as an electronic pen, a stylus pen, and an S-pen. For example, the display 110 may be implemented as a flat display, a curved display, a flexible display capable of being folded or/and rolled, or the like.

The memory 120 may store data required for the various embodiments. The memory 120 may be implemented as a memory embedded in the electronic apparatus 100 or as a memory detachable from the electronic apparatus 100, depending on a purpose of data storage. For example, data for operating the electronic apparatus 100 may be stored in the memory embedded in an electronic apparatus 100, and data for an expanded function of the electronic apparatus 100 may be stored in the memory detachable from the electronic apparatus 100. Meanwhile, the memory embedded in the electronic apparatus 100 may be implemented as at least one of a volatile memory (e.g., a dynamic RAM (DRAM)), a static RAM (SRAM), or a synchronous dynamic RAM (SDRAM)) or a nonvolatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash or a NOR flash), a hard drive, or a solid state drive (SSD)). In addition, the memory detachable from the electronic apparatus 100 may be implemented as at least one of a memory card (e.g., a compact flash (CF) memory, a secure digital (SD) memory, a micro secure digital (Micro-SD) memory, a mini secure digital (Mini-SD) memory, an extreme digital (xD) memory, or a multi-media card (MMC) memory), an external memory which may be connected, directly or indirectly, to a universal serial bus (USB) port (e.g., a USB memory), or the like.

At least one processor 130 may control overall operations of the electronic apparatus 100. In detail, at least one processor 130 may be connected, directly or indirectly, to each component of the electronic apparatus 100 and control the overall operations of the electronic apparatus 100. For example, at least one processor 130 may be electrically connected, directly or indirectly, to the display 110 and the memory 120 and control the overall operations of the electronic apparatus 100. The processor 130 may include one or more processors.

At least one processor 130 may perform an operation of the electronic apparatus 100 according to the various embodiments by executing at least one instruction stored in the memory 120.

At least one processor 130 may include at least one of a central processing unit (CPU), a graphics-processing unit (GPU), an accelerated processing unit (APU), a many integrated core (MIC), a digital signal processor (DSP), a neural processing unit (NPU), a hardware accelerator, or a machine learning accelerator. At least one processor 130 may control one or any combination of other components included in the electronic apparatus, and may perform operations related to communication or data processing. At least one processor 130 may execute at least one program or instruction stored in the memory. For example, at least one processor may perform a method according to an example embodiment(s) by executing at least one instruction stored in the memory.

If a method according to an example embodiment(s) includes a plurality of operations, the plurality of operations may be performed by one processor, or may be performed by a plurality of processors. For example, if a first operation, a second operation, and a third operation are performed by the method according to at least one embodiment, the first operation, the second operation, and the third operation may all be performed by a first processor, or the first operation and the second operation may be performed by the first processor (e.g., a general-purpose processor) and the third operation may be performed by the second processor (e.g., an artificial intelligence-specific processor).

At least one processor 130 may be implemented as a single-core processor including a single core, or as at least one multi-core processor including multiple cores (e.g., homogeneous multiple cores or heterogeneous multiple cores). If at least one processor 130 is implemented as the multi-core processor, each of the multiple cores included in the multi-core processor may include an internal memory of the processor, such as a cache memory or an on-chip memory, and a common cache shared by the multiple cores may be included in the multi-core processor. In addition, each of the multiple cores (or some of the multiple cores) included in the multi-core processor may independently read and perform a program instruction for implementing the method according to an example embodiment(s), or all (or some) of the multiple cores may be linked to read and perform the program instruction for implementing the method according to an example embodiment(s).

If the method according to an example embodiment(s) includes a plurality of operations, the plurality of operations may be performed by the single core among the multiple cores included in the multi-core processor, or may be performed by the multiple cores. For example, if the first operation, the second operation, and the third operation are performed using the method according to at least one embodiment, the first operation, the second operation, and the third operation may all be performed by a first core included in the multi-core processor, or the first operation and the second operation may be performed by the first core included in the multi-core processor and the third operation may be performed by a second core included in the multi-core processor.

In the embodiments of the present disclosure, the processor may indicate a system on a chip (SoC) integrating at least one processor and other electronic components, the single-core processor, the multi-core processor, or a core included in the single-core processor or the multi-core processor. Here, the core may be implemented as the CPU, the GPU, the APU, the MIC, the DSP, the NPU, the hardware accelerator, or the machine learning accelerator. However, an embodiment of the present disclosure is not limited thereto. For convenience of description, at least one processor 130 is hereinafter referred to as the processor 130.

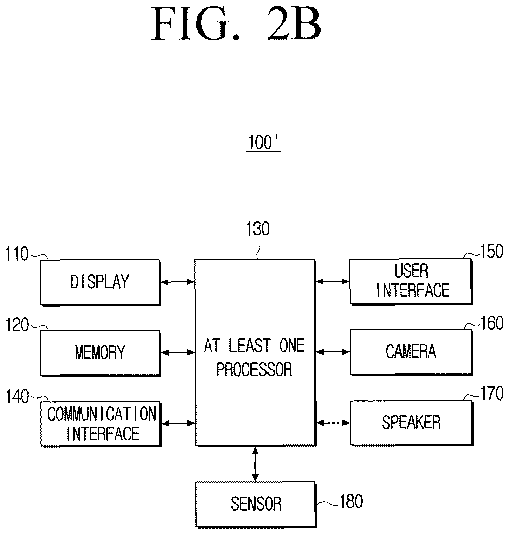

FIG. 2B is a block diagram illustrating a specific configuration of the electronic apparatus according to at least one embodiment.

Referring to FIG. 2B, the electronic apparatus 100' may include the display 110, the memory 120, at least one processor 130, a communication interface 140 comprising interface circuitry, a user interface 150, a camera 160, a speaker 170, and a sensor 180. Detailed descriptions of the components shown in FIG. 2B that overlap with those shown in FIG. 2A are omitted.

The communication interface 140, comprising circuitry, may be implemented as any of various interfaces depending on an implementation example of the electronic apparatus 100'. For example, the communication interface 140 may communicate with the external device, an external storage medium (e.g., the USB memory), an external server (e.g., a web hard), or the like through a communication method such as Bluetooth, access point (AP)-based wireless fidelity (Wi-Fi, wireless local area network (LAN)), Zigbee, wired/wireless local area network (LAN), wide area network (WAN), Ethernet, IEEE 1394, high definition multimedia interface (HDMI), universal serial bus (USB), mobile high-definition link (MHL), audio engineering society/European broadcasting union (AES/EBU) communication, optical communication, or coaxial communication. For example, a communication interface 140 may communicate with other electronic apparatuses, the external server, and/or a remote control device, or the like.

The user interface 150 may be implemented as a device such as a button, a touchpad, a mouse, or a keyboard, or as a touch screen also capable of performing the display and manipulation input functions described above.

The camera 160 may be turned on and capture an image based on a predetermined event. The camera 160 may convert the captured image into an electrical signal and generate image data based on the converted signal. For example, a subject may be converted into an electrical image signal by using a semiconductor optical device (e.g., a charge coupled device (CCD)). The converted image signal in this way may be amplified, converted into a digital signal, and then processed. For example, the camera 160 may be implemented as a standard camera, a stereo camera, or a depth camera.

The speaker 170 may be a component for outputting various audio data, as well as various notification sounds or voice messages. The processor 130 may control the speaker 170 to output feedback or various notifications in audio format according to the various embodiments of the present disclosure.

The sensor 180 may include various types of sensors, such as a touch sensor, a proximity sensor, an acceleration sensor (or a gravity sensor), a geomagnetic sensor, a gyro sensor, a pressure sensor, a position sensor, a distance sensor, and an illuminance sensor.

In addition, the electronic apparatus 100' may include a microphone (not shown), a tuner (not shown), and a demodulator (not shown), in some implementation examples.

The microphone (not shown) may be a component for receiving a user voice or other sounds and converting the same into audio data. However, according to another embodiment, the electronic apparatus 100' may receive the user voice input from the external device through the communication interface 110.

A tuner (not shown) may receive a radio frequency (RF) broadcast signal through an antenna by tuning to a channel selected by the user or all pre-stored channels.

A demodulator (not shown) may receive and demodulate a digital intermediate frequency (IF) signal (DIF) converted by the tuner, and may also perform channel decoding or the like.

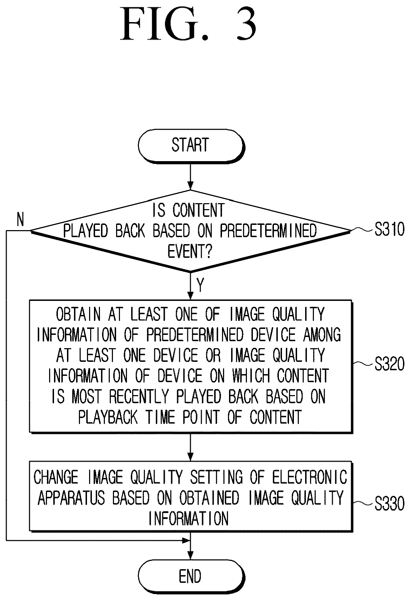

FIG. 3 is a flowchart illustrating an image quality setting method for an electronic apparatus 100 according to at least one embodiment.

According to at least one embodiment shown in FIG. 3, the processor 130 may obtain at least one of image quality information of a predetermined device among at least one external device or image quality information of a device on which the content is most recently played back based on a content playback time point (S320) if the content is played back according to the predetermined event (S310). For example, the predetermined device may be a predetermined main device among the plurality of devices providing an MDE service. For example, the device on which the content is most recently played back may be a device on which the user has a most recent viewing history among a plurality of devices providing the MDE service. For example, the image quality information may include at least one of color temperature information, gamma information, brightness information, color information, sharpness information, motion processing information, contrast ratio information, edge processing information, or texture processing information.

Next, the processor 130 may change an image quality setting of the electronic apparatus 100 based on the obtained image quality information.

For example, the electronic apparatus 100 and the external device may be implemented as the first electronic apparatus 100 and the second electronic apparatus 200 shown in FIGS. 1A and 1B. Accordingly, the electronic apparatus 100 and the external device 200 may be implemented to provide the MDE service through direct communication or communication via the server 300.

According to at least one embodiment, the processor 130 may obtain at least one of image quality information of a predetermined external device or the image quality information of the device on which the content is most recently played back if the content is played back while a function for sharing the image quality information among the plurality of devices is turned on.

For example, the processor 130 may obtain the image quality information from at least one of the predetermined external device or the device on which the content is most recently played back.

For example, which image quality information is to be shared, between the image quality information of the predetermined external device and the image quality information of the device on which the content is most recently played back, may be determined by the function for sharing the image quality information among the plurality of devices.

For example, if the image quality information of the predetermined external device (e.g., a main device) is set to be shared, the electronic apparatus 100 may obtain the image quality information of the corresponding device. For example, for convenience of description, the predetermined external device is referred to as the main device, and the electronic apparatus 100 may be the main device.

For example, if the image quality information of the device on which the content is most recently played back is set to be shared, the electronic apparatus 100 may obtain the image quality information of the corresponding device. For example, the device on which the content is most recently played back may also be the electronic apparatus 100.

For example, the processor 130 may obtain the image quality information of at least one of the predetermined external device or the device on which the content is most recently played back from the external server that manages multi-device experience (MDE) information shared among the plurality of devices. For example, the external server may be implemented as the server 300 shown in FIG. 1B.

According to an embodiment, the processor 130 may transmit, to the external server 300, at least one of information about the content playback time point of the electronic apparatus 100 or updated image quality information of the electronic apparatus 100. In this case, the external server 300 may store and manage each content playback time point and updated image quality information of a plurality of pre-registered devices including the electronic apparatus 100. For example, the external server 300 may manage the content playback time point and updated image quality information of the plurality of pre-registered devices in the form of a lookup table. In this case, the external server 300 may transmit, to the electronic apparatus 100, the image quality information of the main device or the image quality information of the device on which the content is most recently played back if the predetermined event occurs in the electronic apparatus 100 or at a request from the electronic apparatus 100.

According to an embodiment, the processor 130 may store and manage the content playback time point and updated image quality information of the plurality of pre-registered devices including the electronic apparatus 100. For example, if implemented as a device that manages the MDE service, the electronic apparatus 100 may directly receive the content playback time point and the updated image quality information from the plurality of devices and manage the information.

Meanwhile, in the above-described embodiment, the image quality information is described as being obtained if the content is played back on the electronic apparatus 100. However, this configuration is provided for convenience of description and is not limited thereto.

For example, the electronic apparatus 100 may obtain the image quality information in advance, store the same in the memory 120, and then change the image quality setting based on the image quality information if the content is played back. Alternatively, if the image quality information of the predetermined device is updated, the image quality information may be shared with the plurality of devices including the electronic apparatus 100. Alternatively, the image quality information of the device on which content is most recently played back may be shared with the plurality of devices including the electronic apparatus 100 at the time point at which the content is played back on the corresponding device.

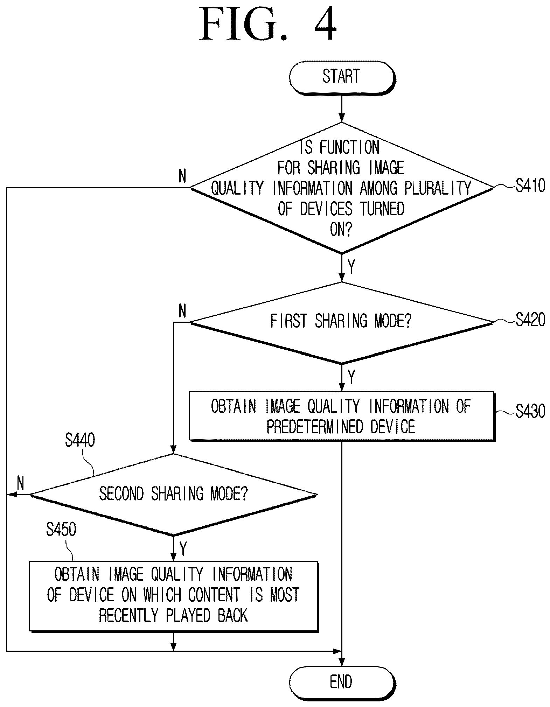

FIG. 4 is a flowchart illustrating an image quality setting method for the electronic apparatus according to at least one embodiment.

According to an embodiment, the processor 130 may identify whether a configured sharing mode is a first sharing mode (S420) if the function for sharing the image quality information among the plurality of devices is turned on (S410).

The processor 130 may obtain the image quality information of the predetermined device (S430) if the configured sharing mode is identified as the first sharing mode (S420:Y).

In addition, the processor 130 may identify whether the configured sharing mode is a second sharing mode (S440) if the configured sharing mode is identified as not being the first sharing mode (S420:N).

The processor 130 may obtain the image quality information of the device on which the content is most recently played back (S450) if the configured sharing mode is identified as the second sharing mode (S440:Y).

For example, the first sharing mode may be a mode in which the plurality of devices providing the MDE service share the image quality information of the predetermined main device (e.g., a TV). In addition, the second sharing mode may be a mode in which the plurality of devices providing the MDE service share the image quality information of the device on which the content is most recently played back.

According to at least one embodiment, the processor 130 may provide a first user interface (UI) screen for selecting one of the plurality of image quality information sharing modes. For example, the first UI screen may include an option menu for selecting one of the first sharing mode and the second sharing mode. In an example, the processor 130 may obtain one of the image quality information of the predetermined device or the image quality information of the device on which the content is most recently played back based on the image quality information sharing mode selected through the first UI screen.

According to at least one embodiment, the processor 130 may provide a second UI screen for selecting an image quality setting value to be shared in each of the plurality of image quality information sharing modes. For example, the second UI screen may include an option menu for selecting the image quality setting value to be shared in each of the first sharing mode and the second sharing mode.

In an example, the processor 130, comprising processing circuitry, may obtain the image quality information based on the image quality setting value selected through the second UI screen in each of the plurality of image quality information sharing modes. For example, the predetermined image quality setting value may be shared in each of the first sharing mode and the second sharing mode. However, only the image quality setting value selected through the second UI screen may be shared.

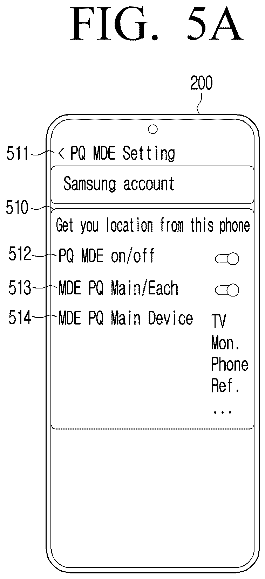

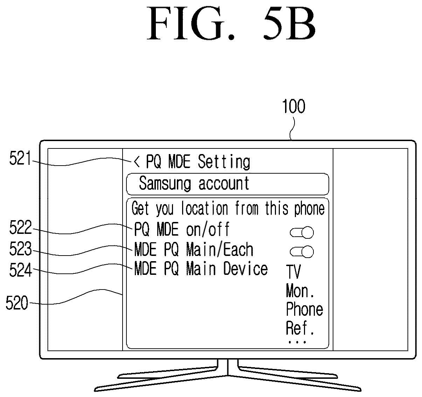

FIGS. 5A and 5B are diagrams each illustrating an exemplary user interface (UI) screen according to at least one embodiment.

According to at least one embodiment, a UI screen for setting the image quality sharing mode may include an option for setting the image quality sharing, an option for turning on and off the image quality sharing mode, an option for setting the image quality sharing mode, and an option for setting the main device in the first sharing mode.

In an example, the UI screen for setting the image quality sharing mode may be provided as a menu on an execution screen of the IoT application installed on the smartphone 200 as shown in FIG. 5A.

For example, the IoT application may provide an option menu 511 for setting the image quality sharing on the execution screen, and if the menu 511 is selected, a UI screen 510 may be provided that includes an option 512 for turning on and off the image quality sharing mode, an option 513 for setting the image quality sharing mode, and an option 514 for setting the main device in the first sharing mode. For example, the title of the option menu for setting the image quality sharing mode may be "PQ MDE Setting." In addition, the option 512 for turning on and off the image quality sharing mode may be "PQ MDE ON/OFF." In addition, the option 513 for setting the image quality sharing mode may be "MDE PQ Main/Each." Here, the main mode may refer to the first sharing mode for sharing the image quality information of the main device described above, and each mode may refer to the second sharing mode for sharing the image quality information of the recently viewed device described above. The option 514 for setting the main device in the first sharing mode may be "MDE PQ Main Device."

According to at least one embodiment, the UI screen for setting the image quality sharing mode may be provided on at least one of the plurality of devices providing the MDE service, and may also be provided on a screen of a TV 100 as shown in FIG. 5B. In case of the TV screen, the UI screen may be provided on the execution screen of the IoT application, similar to the smartphone 200, or may be provided through an OSD menu of the TV. For example, the UI screen 520 provided on the TV screen may include an option title 521 for setting the image quality information sharing setting, an option 522 for turning on and off the image quality sharing mode, an option 523 for setting the image quality sharing mode, and an option 524 for setting the main device in the first sharing mode, as shown in FIG. 5B.

However, the UI screens shown in FIGS. 5A and 5B are only examples, and an arrangement of each option, an option type (e.g., a toggle type, a button type, or the like), and the title may be modified in various ways.

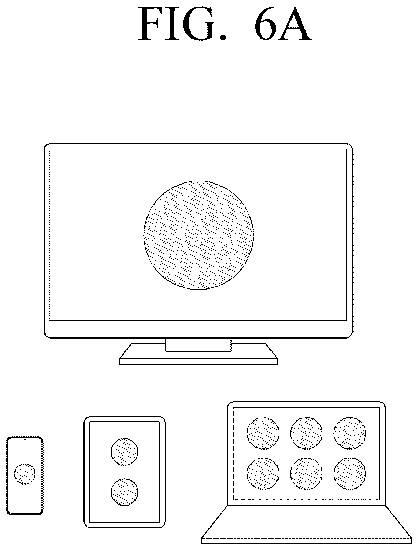

FIGS. 6A to 6F are diagrams each illustrating various MDE services according to at least one embodiment.

FIG. 6A is a diagram illustrating Coherence mode, which is an example of the MDE service. Coherence mode refers to a view mode that allows the user to execute another application within a specific application. For example, the user may use Windows and Mac applications simultaneously without managing or bootstrapping two separate desktops. The function for sharing the image quality information described above may also be provided among the plurality of devices operated in Coherence mode.

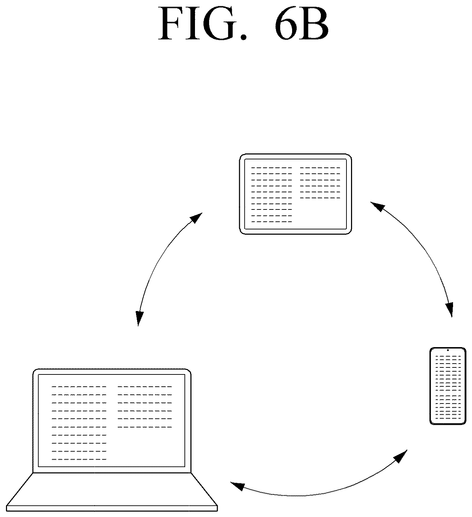

FIG. 6B is a diagram illustrating Synchronization mode, which is an example of the MDE service. Synchronization mode refers to a mode in which the plurality of devices are temporarily synchronized and used. Therefore, the above-described function for sharing the image quality information may be provided among the plurality of devices operated in Synchronization mode.

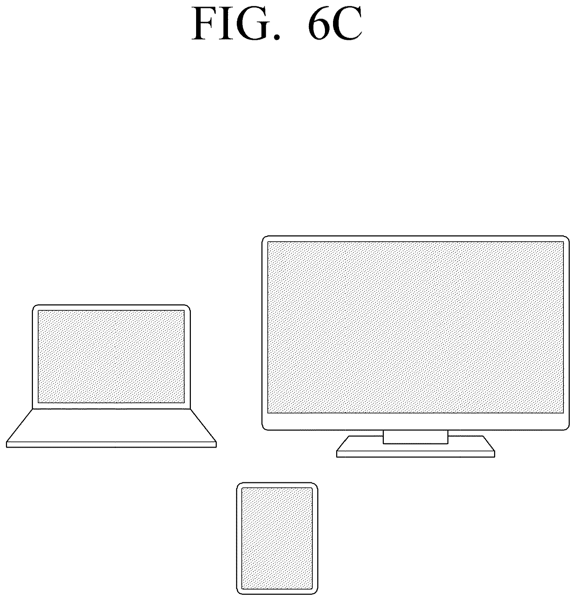

FIG. 6C is a diagram illustrating Screen Sharing mode, which is an example of the MDE service. Screen Sharing mode refers to a mode for sharing the screens of the plurality of devices, and therefore, the above-described function for sharing the image quality information may be provided among the plurality of devices operated in Screen Sharing mode.

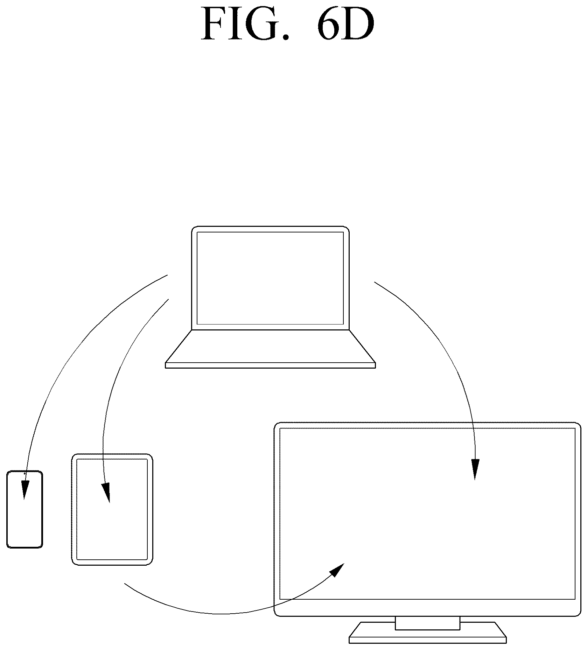

FIG. 6D is a diagram illustrating Device Shifting mode, which is an example of the MDE service. Device Shifting mode refers to a mode operated by shifting the content between the plurality of devices, and therefore, the above-described function for sharing the image quality information may also be provided among the plurality of devices operated in Device Shifting mode.

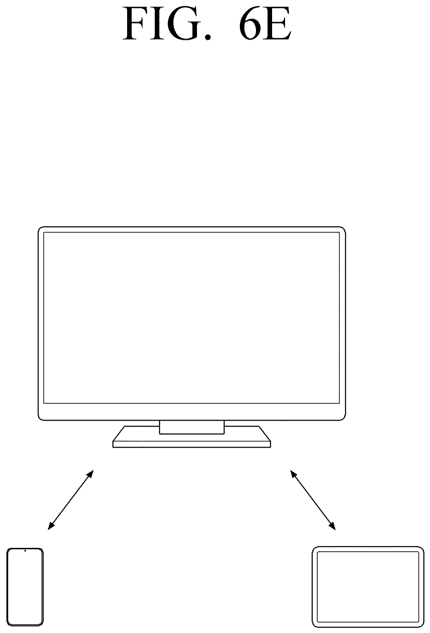

FIG. 6E is a diagram illustrating Complementarity mode, which is an example of the MDE service. Complementarity mode refers to a mode in which the plurality of devices are operated in a complementary manner, and therefore, the above-described function for sharing image quality information may be provided among the plurality of devices operated in Complementarity mode.

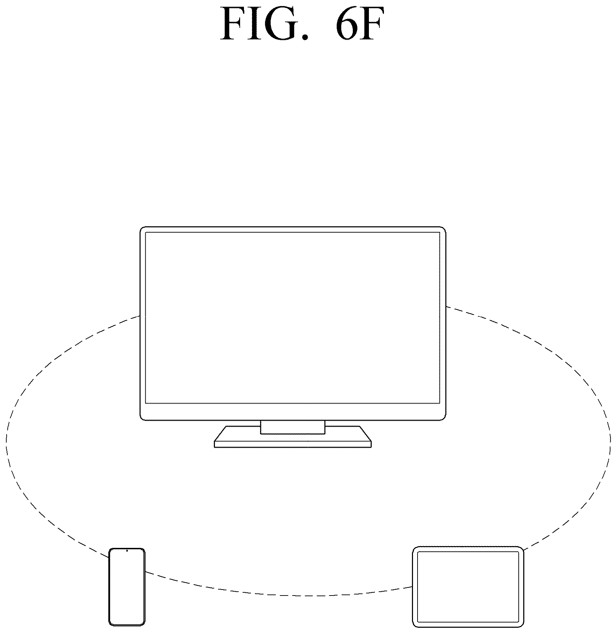

FIG. 6F is a diagram illustrating Simultaneity mode, which is an example of the MDE service. Simultaneity mode refers to a mode in which the plurality of devices are operated simultaneously, and therefore, the above-described function for sharing image quality information may be provided among the plurality of devices operated in Simultaneity mode.

According to at least one embodiment, the electronic apparatus 100 may change the image quality setting of the display 110 based on the image quality information obtained based on the sharing mode. For example, the electronic apparatus 100 may identify target image quality information based on at least one of the obtained image quality information and specification information of the display 110, for example, the resolution, panel type, or panel performance of the display 110, and may change the image quality setting of the display 110 based on the identified target image quality information.

For example, the image quality information shared among the plurality of devices providing the MDE service may include at least one of the color temperature information, the gamma information, the brightness information, the color information, the sharpness information, the motion processing information, or the contrast ratio information. For example, the color temperature information may be expressed as a value of 6500 K to 12000 K, and not limited thereto. For example, the gamma information may be expressed as a value of 2.2, 2.4, ST2084, HLG, or the like. For example, the brightness information may include a brightness value or a brightness ratio. For example, the color information may include a color value or a color ratio. For example, the sharpness information may include a sharpness value or a sharpness ratio. For example, the motion processing information may include image processing information based on a motion magnitude. For example, the contrast ratio information may include tone mapping curve information.

According to at least one embodiment, each device may have a different display feature. Accordingly, it may be difficult to apply the image quality information identically to each device even if the devices share the same image quality information. For example, the color temperature information and the gamma information may be reflected identically across the plurality of devices. However, the brightness information, the color information, the sharpness information, or the like may be difficult to be identically applied to the devices depending on at least one of the resolution, panel type, or panel performance of a display included in each device. In this case, the same ratio, similar value, or the like may be applied to the devices based on the obtained image quality information. For example, if the obtained brightness information is 80% of the maximum brightness of a target device, the electronic apparatus 100 may change the image quality setting to 80% of a maximum value of the display 110. In addition, if the electronic apparatus 100 is a user terminal such as the smartphone, the battery status or the like may also affect the image quality setting. For example, the image quality may be set to 450 nits if the battery status of the electronic apparatus 100 is capable of outputting up to 450 nits although the obtained brightness information is 500 nits. For example, if the obtained image quality setting is a function not supported on the electronic apparatus 100, the image quality setting may be ignored, or a similar image quality setting function may be applied to the device.

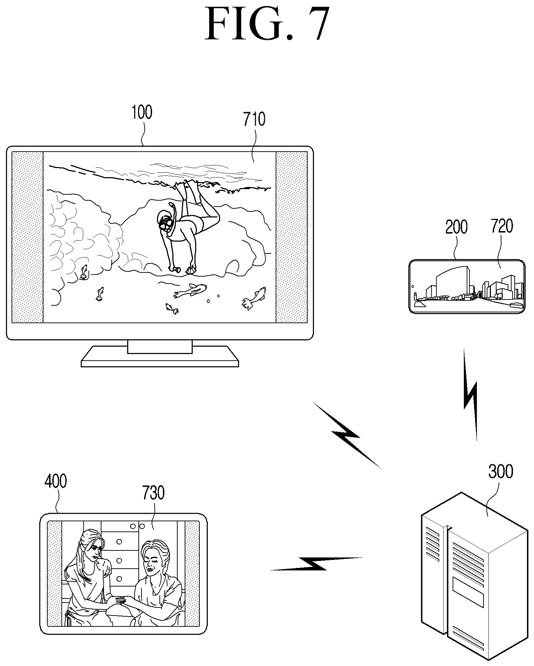

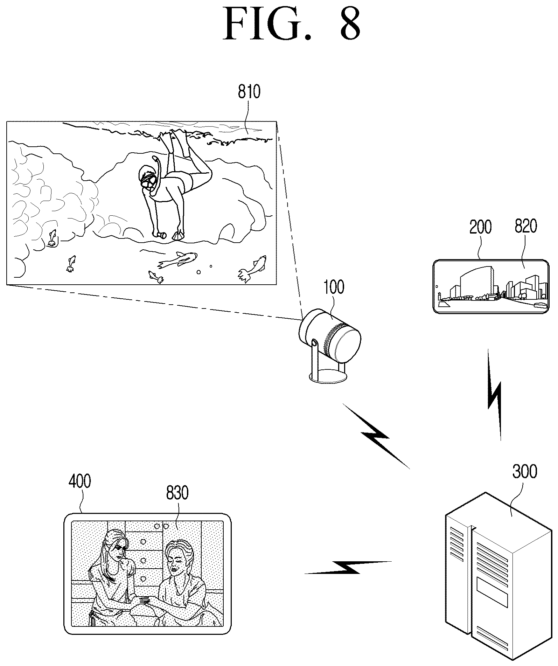

FIGS. 7 and 8 are diagrams each describing a method for sharing the image quality information according to at least one embodiment.

According to at least one embodiment, it is assumed that the first electronic apparatus 100, the second electronic apparatus 200, and a third electronic apparatus 400 are registered as the MDE service providing devices through the server 300.

For example, if the content is played back on the first electronic apparatus 100, the first electronic apparatus 100 may obtain the image quality information of the main device or the recently viewed device, depending on the configured sharing mode. For example, the sharing mode may be set identically across the plurality of devices providing the MDE service, or may be set differently for each device. For example, the first electronic apparatus 100, the second electronic apparatus 200, and the third electronic apparatus 400 may all be set to the first sharing mode, or the first electronic apparatus 100 may be set to the second sharing mode, and the second electronic apparatus 200 and the third electronic apparatus 400 may be set to the first sharing mode.

According to at least one embodiment, if the sharing mode of the first electronic apparatus 100 is set to the second sharing mode, the first electronic apparatus 100 may obtain the image quality information of the device on which the content is most recently played back (or the device most recently viewed by the user) and change the image quality setting based on the obtained image quality information. For example, if the third electronic apparatus 400 is the device on which the content is most recently played back, the first electronic apparatus 100 may receive the image quality information of the corresponding device from the server 300. Alternatively, the first electronic apparatus 100 may directly receive the image quality information of the corresponding device from the third electronic apparatus 400.

For example, referring to FIG. 7, the first electronic apparatus 100 implemented as a TV may obtain the image quality information of the third electronic apparatus 400 implemented as a tablet. The first electronic apparatus 100 may adjust a color temperature of the display 110 based on the color temperature information included in image quality information of the third electronic apparatus 400 and correct a gamma value of the display 110 based on the gamma information. Here, the color temperature refers to a numerical expression of a color of a light source based on an absolute temperature. The color temperature may be lower for a redder light source and higher for a bluer light source. The temperature may use Kelvin, a traditional absolute temperature unit. Gamma refers to a value for determining a correlation between the brightness (or a gray level) of a signal input into the display and a luminance of an image displayed on the screen. The user may feel a difference in a brightness tone expressed on the same screen based on the gamma value.

In addition, each of the first electronic apparatus 100 and the third electronic apparatus 400 may change the image quality setting of the display 110 based on at least one of the brightness information, the color information, the sharpness information, the motion processing information, or the contrast ratio information. For example, if the first electronic apparatus 100 has difficulty in directly reflecting an image quality value of the third electronic apparatus 400, the first electronic apparatus 100 may reflect the image quality value in the form of an appropriate factor, such as a ratio or similar value.

For example, referring to FIG. 8, the first electronic apparatus 100 implemented as a projector device may obtain the image quality information of the third electronic apparatus 400 implemented as a tablet. The first electronic apparatus 100 may adjust the brightness of a projected image based on brightness information included in the obtained image quality information of the third electronic apparatus 400. However, it may be difficult to set the same brightness based on an image projection function of the first electronic apparatus 100 and at least one of specification information of a display included in the third electronic apparatus 400, such as resolution, panel type, or panel performance. The brightness of the projected image may be adjusted based on the image projection function of the first electronic apparatus 100 and at least one of the resolution, panel type, or panel performance of the display included in the third electronic apparatus 400 to allow the brightness of the image projected through the first electronic apparatus 100 to be similar to the brightness of the image provided on the display included in the third electronic apparatus 400.

According to at least one embodiment, the electronic apparatus 100 may obtain the target image quality information of the electronic apparatus 100 based on the image quality information of the external device obtained using a trained network model. For example, the electronic apparatus 100 may obtain the target image quality information for implementing the same image quality in the electronic apparatus 100 by inputting the obtained image quality information of the external device and the specification information of the electronic apparatus 100 (e.g., the specification information of the display) into the trained network model.

According to the various embodiments described above, the present disclosure may provide the same image quality experience across the plurality of devices providing the MDE service, thereby improving an user experience (UX) of the user.

Meanwhile, the methods according to the various embodiments of the present disclosure described above may be implemented in the form of an application capable of being installed on a conventional electronic apparatus. Alternatively, the methods according to the various embodiments of the present disclosure described above, for example, the image processing based on the obtained image quality information, may be performed using a deep learning-based artificial neural network (or deep artificial neural network), e.g., the trained network model. Alternatively, the target image quality information corresponding to the obtained image quality information may be obtained using the trained network model.

In addition, the methods according to the various embodiments of the present disclosure described above may be implemented only by software upgrade or hardware upgrade of the conventional electronic apparatus.

In addition, the various embodiments of the present disclosure described above may be performed through an embedded server included in the electronic apparatus, or an external server of the electronic apparatus.

Meanwhile, according to an embodiment of the present disclosure, the various embodiments described above may be implemented in software including an instruction stored on a machine-readable storage medium (for example, a computer-readable storage medium). A machine may be a device that invokes the stored instruction from a storage medium, may be operated based on the invoked instruction, and may include the display device (e.g., electronic apparatus A) according to the disclosed embodiments. If the instruction is executed by the processor, the processor may directly perform a function corresponding to the instruction or other components may perform the function corresponding to the instruction under control of the processor. The instruction may include codes provided or executed by a compiler or an interpreter. The machine-readable storage medium may be provided in the form of a non-transitory storage medium. Here, the term "non-transitory" refers to that the storage medium is tangible without including a signal, and does not distinguish whether data are semi-permanently or temporarily stored on the storage medium

In addition, according to one or more embodiments, the methods according to the various embodiments described above may be included and provided in a computer program product. The computer program product may be traded as a commodity between a seller and a purchaser. The computer program product may be distributed in a form of the machine-readable storage medium (for example, a compact disc read only memory (CD-ROM)), or may be distributed online through an application store (for example, PlayStore^{™}). In case of the online distribution, at least a part of the computer program product may be at least temporarily stored or temporarily provided on a storage medium such as the memory of a manufacturer server, an application store server, or a relay server.

In addition, each of the components (for example, modules or programs) according to the various embodiments described above may include a single entity or a plurality of entities, and some of the corresponding sub-components described above may be omitted or other sub-components may be further included in the various embodiments. Alternatively or additionally, some of the components (for example, the modules or the programs) may be integrated into the single entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Although the embodiments are shown and described in the present disclosure as above, the present disclosure is not limited to the above-described specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic apparatus comprising:
a display;
a memory storing at least one instruction; and
at least one processor connected to the display and the memory, and configured to control the electronic apparatus,
wherein by executing the at least one instruction, the at least one processor is configured to:
obtain at least one of image quality information of a predetermined device among at least one external device or image quality information of a device on which content is most recently played back based on a content playback time point when the content is played back according to a predetermined event, and
change an image quality setting of the display based on the obtained image quality information.

2. The device as claimed in claim 1, wherein the at least one processor is configured to obtain the at least one of the image quality information of the predetermined device or the image quality information of the device on which the content is most recently played back when the content is played back while a function for sharing image quality information among a plurality of devices is turned on.

3. The device as claimed in claim 1, further comprising a communication interface,
wherein the at least one processor is configured to obtain the image quality information from at least one of the predetermined device or the device on which the content is most recently played back via the communication interface.

4. The device as claimed in claim 1, further comprising a communication interface,
wherein the at least one processor is configured to obtain the image quality information of at least one of the predetermined device or the device on which the content is most recently played back from an external server that manages multi-device experience (MDE) information shared among the plurality of devices via the communication interface.

5. The device as claimed in claim 4, wherein the at least one processor is configured to control to transmit, to the external server, at least one of information about the content playback time point of the electronic apparatus or updated image quality information of the electronic apparatus.

6. The device as claimed in claim 1, wherein the at least one processor is configured to
provide a first user interface (UI) screen for selecting one of a plurality of image quality information sharing modes, and
obtain one of the image quality information of the predetermined device or the image quality information of the device on which the content is most recently played back based on the image quality information sharing mode selected through the first UI screen.

7. The device as claimed in claim 6, wherein the at least one processor is configured to
provide a second UI screen for selecting an image quality setting value to be shared in each of the plurality of image quality information sharing modes, and
obtain the image quality information based on the image quality setting value selected through the second UI screen in each of the plurality of image quality information sharing modes.

8. The device as claimed in claim 1, wherein the at least one processor is configured to:
identify target image quality information based on at least one of the obtained image quality information and the resolution, panel type, or panel performance of the display, and
change the image quality setting of the display based on the identified target image quality information.

9. The device as claimed in claim 1, wherein the image quality information includes at least one of: color temperature information, gamma information, brightness information, color information, sharpness information, motion processing information, or contrast ratio information.

10. An image quality setting method for an electronic apparatus, the method comprising:
obtaining at least one of image quality information of a predetermined device among at least one external device or image quality information of a device on which content is most recently played back based on a content playback time point when the content is played back according to a predetermined event; and
changing an image quality setting of a display based on the obtained image quality information.

11. The method as claimed in claim 10, wherein in the obtaining of the at least one of the image quality information, the at least one of the image quality information of the predetermined device or the image quality information of the device on which the content is most recently played back is obtained when the content is played back while a function for sharing image quality information among a plurality of devices is turned on.

12. The method as claimed in claim 10, wherein in the obtaining of the at least one of the image quality information, the image quality information is obtained from at least one of the predetermined device or the device on which the content is most recently played back.

13. The method as claimed in claim 10, wherein in the obtaining of the at least one of the image quality information, the image quality information of at least one of the predetermined device or the device on which the content is most recently played back is obtained from an external server that manages multi-device experience (MDE) information shared among the plurality of devices through a communication interface.

14. The method as claimed in claim 13, further comprising transmitting, to the external server, at least one of information about the content playback time point of the electronic apparatus or updated image quality information of the electronic apparatus.

15. A non-transitory computer-readable medium storing computer instructions that cause an electronic apparatus to perform an operation if executed by a processor of the electronic apparatus, the operation comprising:
obtaining at least one of image quality information of a predetermined device among at least one external device or image quality information of a device on which content is most recently played back based on a content playback time point based on the content being played back according to a predetermined event, and
changing an image quality setting of a display based on the obtained image quality information.
